# EUROPEAN PATENT APPLICATION

(11) **EP 1 746 211 A1**
(43) Date of publication of application: **24.01.2007**
(21) Application number: 05076679.9
(22) Date of filing: 20.07.2005
(51) Int. Cl.: E01H 11/00, A01D 34/90

(54) **Protection hood for weed removing device**

(71) Applicant: Bouland, Meint Johannes, 3335 BH Zwijndrecht (NL)
(72) Inventor: Bouland, Meint Johannes, 3335 BH Zwijndrecht (NL)

(57) **Abstract**

The invention relates to an innovative protection hood (2) for placement over an extension part (3) with sweeper elements (5) of a forest mower or weed mower (1), in which the mentioned protection hood (2) with special facilities is manoeuvrable in relation to the handle with shaft (13), so that an optimal and easy useable protection hood (2) is created, through which with the rotating sweeper elements (5) the weeds (6) in the joints (7) of paved elements can be removed in a safe and economic way.

## Description

The present invention relates to a protection hood for placing over the extension part provided with exchangeable sweeper elements, in which the mentioned extension part is situated at the bottom end of the handle with shaft of the weed mower, in which the top end of the handle of the weed mower is provided with operating means of the weed mower for the user, in which on the mentioned protection hood facilities are applied for attachment of the handle and the manoeuvring of it in relation to the protection hood.

Weed mowers are, amongst others, known from the European Patent document nr. 03077349.3, submitted on the 25-7-2003 and the PCT/EP2004/007629, submitted 8-7-2004, titled: "Modified Extension Part and Sweeper Body for Weed Mowers" from the submitter/inventor BOULAND, Meint, Johannes from ZWIJNDRECHT, The Netherlands and inventor VAN LEEUWEN, Peter, Frank, from WEESP, The Netherlands.

Here, it concerns a weed mower provided with a modified extension part with sweeper element, in which the extension part is constructed as a cylindrical disc with continuous recesses and at least two radial opposite non-continuous recesses for receiving the sweeper element, mostly consisting of a piece of steel wire cable with pressed on bush, in which the locking has been done in an inventive way without the necessity of tools.

When using the aforementioned weed mower with rotating extension part with sweeper element, the steel wire cable parts move outwards due to strong centrifugal forces. Herewith, the disadvantage occurs that pieces of worn metal thread, stones, weed and such are flung away by the strong centrifugal forces and so become a danger for the user of the weed mower (as they are reflected against the curb and such) and bystanders, objects and such.

From the website of the submitter, a limited protection possibility of the extension part is known, that also has the above described disadvantages in the known embodiment.

It is the aim of the invention to make the use of the weed mower with strongly rotating extension part with sweeper element safer by sufficiently covering the extension part with sweeper element, especially with regard to the user, with a sufficient large protection hood, in which the extension part with sweeper element can also be well manoeuvred.

For this, a protection hood applied over the extension part with sweeper element and fixed to the handle of the weed mower, according to the invention, is further developed and/or modified in such an inventive way, characterised in that the mentioned protection hood is constructed of a roughly semicircular raised edge with cover plate mounted thereon, in which with the applied facilities for attachment of the handle with shaft to the cover plate the mentioned handle is partly canting at an angle α over its longitudinal axis and is telescopic over a limited length MAX L, through which the extension part with sweeper element moves forward underneath the protection hood.

The advantage is a very effective protection whilst working with the weed mower, while no waste or dirt or remnants heap up underneath the protection hood.

Further, the device according to the invention is further developed in such a way, that the mentioned facilities consist of a bolted wide bended clasp on the cover plate with a first pair of shafts with a double mutual spring-loaded telescopic pair of blocks at the end, in which the extreme block with a hinging brace is connected slideable with the handle with shaft of the weed mower, in which the inner block is coupled thereto by means of tension springs, in which a second shaft is slideable through the centre of the mentioned extreme block and is fixed rotatably in the mentioned inner block, in which the end of the mentioned second shaft with hinging brace is fixed axially on the handle with shaft of the weed mower.

The advantage is, that the extension part with sweeper element can be manoeuvred freely underneath the protection hood due to this connection construction, in which little effort is required by the user.

Furthermore, the device according to the invention is further developed in such a way, that at the mentioned bolted wide bended clasp in the cover plate of the protection hood tangential recesses are applied for turning the mentioned protection hood in relation to the mentioned handle.

The advantage is, that the protection hood is rotatable in order to work more easily with elements along the edges of the paving.

Furthermore, the device according to the invention is further developed in such a way, that the mentioned roughly semicircular raised edge is a plastic plate, such as, for example, polyethylene with such a plate thickness that a rigid, little deformable edge is created for catching the pieces of steel wire centrifugally flung away from the sweeper element, e.g. stones and weed and such. Also, the non wear-resistant polyethylene edge can be easily replaced by unscrewing the fastening screws.

The advantage is, that the actual protection hood easily slides over the paving and without causing any damages.

The preferred construction of the invention will be described by way of example, and with reference to the accompanying drawing.

In which:
- Fig. 1: shows a view in oblique projection of a forest mower or weed mower with protection hood over the extension part according to a preferred embodiment of the invention;
- Fig. 2: shows a side view of the protection hood with a part of the handle with shaft of the weed mower;
- Fig. 3: shows a top view of the protection hood according to the line III-III of figure 2; and
- Fig. 4A up to 4D: show views in oblique projection of the protection hood with manoeuvre possibilities of the handle with shaft of the weed mower and mentioned protection hood.

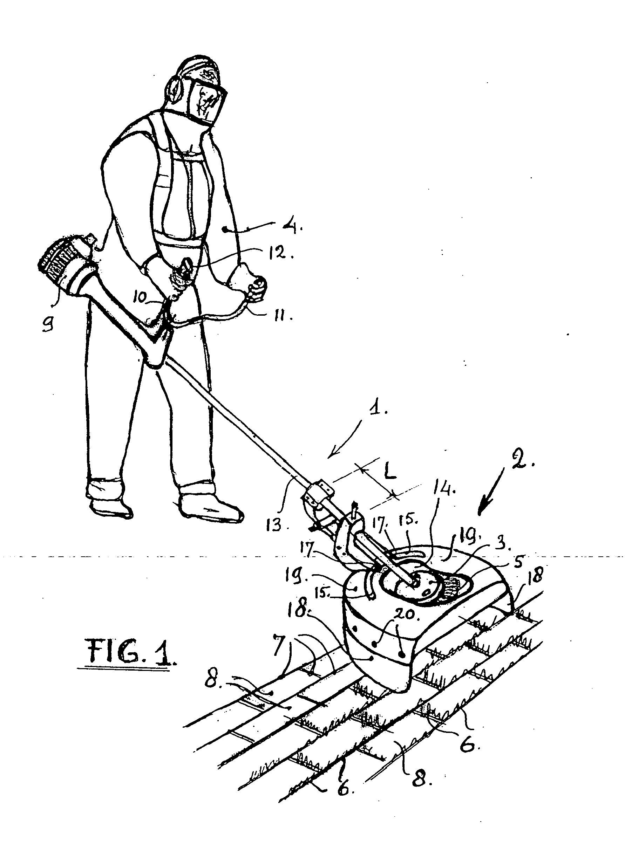

Figure 1 shows a weed mower 1 with the protection hood 2 over the extension part 3 according to a preferred embodiment of the invention. The weed mower 1 is operated by the user 4, who can axially slide the extension part 3 over the length MAX. L with the sweeper elements 5 in relation to the protection hood 2 and can cant at an angle α to optimally remove the weed 6 in the joints 7 of the pavement 8 with the sweeper elements 5. The extension part 3 rotates via the shaft in the handle 13 (construction of tube handle with shaft) with a common angular speed ø for these weed mowers (see figure 2). The weed mower 1 is driven by motor 9 and can be controlled with handles 10, 11, in which handle or handgrip 10 contain the operating means 12. In the protection hood 2 an opening 14 and the tangential recesses 15 are situated to rotate the protection hood 2 in relation to the handle with shaft 13, as the clasp 16 is fixed with screws 17 onto the protection hood 2. The protection hood 2 is constructed of a roughly semicircular raised edge 18 with a cover plate 19, which are mutually connected by screws 20.

In figure 2, which shows a side view of the protection hood, the same parts are indicated with the same position numbers. Also, the adjusting screw 21 is shown for adjustment of the angle of inclination of the handle with shaft 13 at an angle α of approximately 15 degrees. The handle with shaft 13 is a tube with shaft to rotatably drive the extension part 3. Furthermore is shown, the spring-loaded system of blocks, being the extreme block 22 with a hinging brace 23 with adjustment bolt 21, which is telescopically connected over the handle with shaft 13. The inner block 24 is connected to the extreme block 22 by means of drawing springs. Further, the mutual distance between the extreme block 22 and the inner block 24 is fastened with axis 26, which is rotatable with a hinge 27 with brace 28 on the handle with shaft 13 of the weed mower 1. By exerting an axial force F onto the handle with shaft 13 of the weed mower, the drawing springs 25 are extended and the extension part 3 moves underneath the protection hood 2.

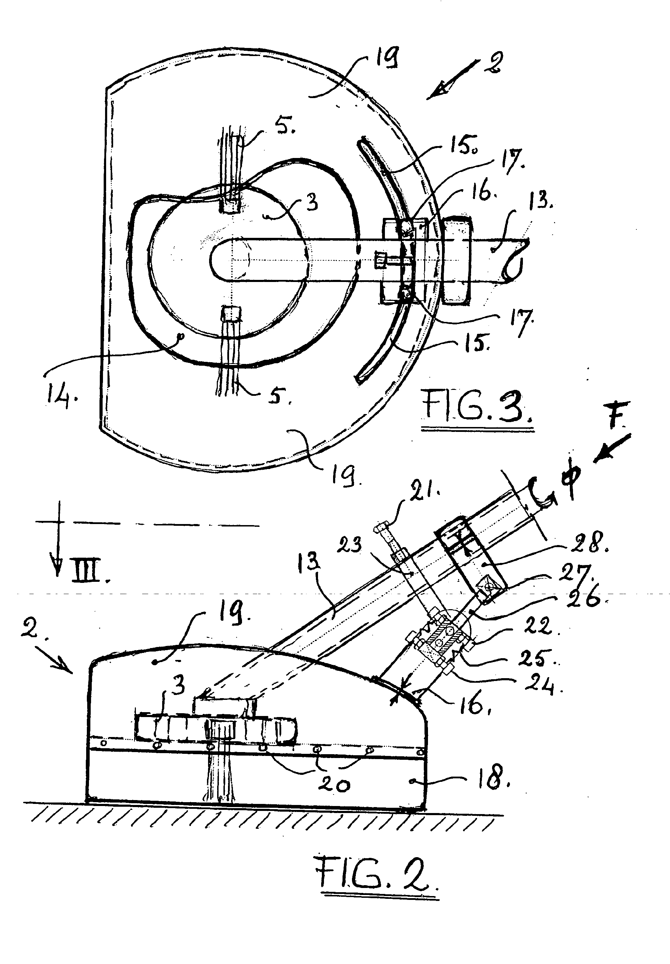

Figure 3 shows a top view over the line III in figure 2 of the protection hood 2. Here, the several recesses 14 and 15 are clearly shown. Also, the handle with shaft 13 for driving the extension part 3 is provided with sweeper element 5. In this case two sweeper elements and for other embodiments three or more equally divided along the circumference of the extension part 3. Rotation of the protection hood 2 in relation to the handle with shaft or driving shaft 13 is secured by the tangential recesses 15.

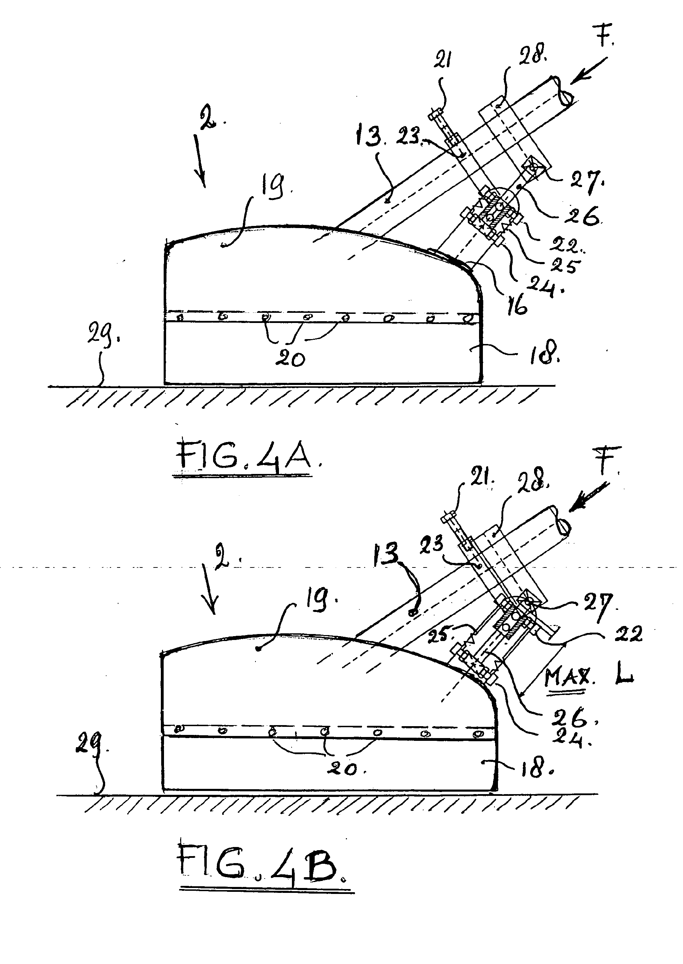

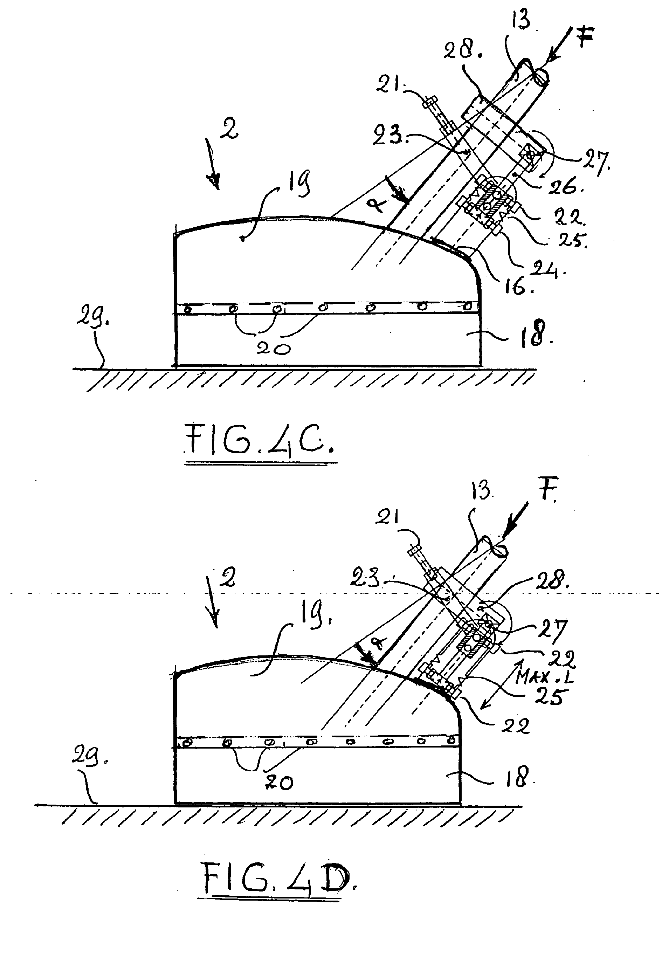

Figures 4A up to 4D show in side view the working of the handle with shaft 13 in relation to the protection hood 2. By adjusting the adjustment bolt 21 in the telescopic brace 23, the angle α can be adjusted to 15 degrees (see figures 4C and 4D) and by executing an axial force F on the handle with shaft 13 the drawing springs 25 can be extended to MAX L (approximately 40-80 mm, preferably approximately 50 mm). Further, for the remaining parts the same position numbers are used.

It may further be mentioned, that the roughly semicircular raised edge 18 is made of plastic, such as, for example, polyethylene of a suitable thickness. The cover plate 19 will mostly be made of stainless steel. This way the protection hood 2 can be pushed over the paving 29.

Finally it has to be emphasized, that the above description constitutes a preferred embodiment of the protection hood 2 with connection to the handle with shaft 13 of the weed mower 1, but that obviously further variations and modifications are still possible without departing the scope of this patent description.

## Claims

1. Protection hood for placing over the extension part (3) provided with exchangeable sweeper elements (5), in which the mentioned extension part (3) is situated at the bottom end of the handle with shaft (13) of the weed mower (1), in which the top end of the handle of the weed mower is provided with operating means of the weed mower for the user, in which on the mentioned protection hood (2) facilities are applied for attachment of the handle with shaft (13) and the manoeuvring of it in relation to the protection hood (2), **characterized in that**, the mentioned protection hood (2) is constructed of a roughly semicircular raised edge (18) with cover plate (19) mounted thereon, in which with applied facilities for attachment of the handle with shaft (13) to the cover plate (19) the mentioned handle is partly canting at an angle α in relation to the protection hood (2) and is telescopic in it at a limited length MAX L.

2. Protection hood as claimed in claim 1, **characterized in that**, the mentioned facilities consist of a bolted wide bended clasp (16) on the cover plate with a first pair of shafts with a double mutual spring-loaded telescopic pair of blocks (22, 24) at the end, in which the extreme block (22) with a hinging brace (23) is connected slideable with the handle with shaft (13) of the weed mower (1), in which the inner block (24) is coupled thereto by means of tension springs (25), in which a second shaft (26) is slideable through the centre of the mentioned extreme block and is fixed rotatably in the mentioned inner block (24), in which the end of the mentioned second shaft (26) with hinging brace is fixed axially on the handle with shaft (13) of the weed mower (1).

3. Protection hood as claimed in claims 1-2, **characterized in that**, in the mentioned cover plate (19) a large recess (14) is applied for manoeuvring the handle (13) with extension part (3) in the space beneath the protection hood (1).

4. Protection hood as claimed in claim 2, **characterized in that**, at the mentioned bolted wide bended clasp (16) in the cover plate (19) of the protection hood (2) tangential recesses (15) are applied for turning the mentioned protection hood (2) in relation to the mentioned handle with shaft (13) .

5. Protection hood as claimed in claim 1, **characterized in that**, the mentioned roughly semicircular raised edge (18) is a plastic plate, such as, for example, polyethylene with such a plate thickness that a rigid, little deformable edge is created for catching the pieces of steel wire centrifugally flung away from the sweeper element, e.g. stones and weed and such.

6. Protection hood as claimed in claim 1, **characterized in that**, the mentioned cover plate (19) is of metal, such as, for example, galvanised steel or stainless steel.

7. Protection hood as claimed in claims 1 and 2, **characterized in that**, the mentioned facilities are of metal, such as, for example, galvanised steel or stainless steel.

8. Protection hood as claimed in claim 1, **characterized in that**, the angle α lies between 8 and 30 degrees, preferably approximately 15 degrees.

9. Protection hood as claimed in claim 1, **characterized in that**, the length MAX L lies between 30 and 90 mm, preferably approximately 50 mm.

## Amended claims

### Amended claims in accordance with Rule 86(2) EPC.

**1.** Protection hood for placing over the extension part (3) of a weed mower (1), the weed mower (1) being provided with a handle with shaft (13), the extension part (3) being situated at the bottom end of the handle with shaft (13) and being provided with exchangeable sweeper elements (5), the top end of said handle with shaft (13) being provided with operating means of the weed mower for the user, said protection hood (2) comprising facilities for attachment of the handle with shaft (13) and the manoeuvring thereof in relation to the protection hood (2), **characterised in that**, said protection hood (2) is constructed of a roughly semicircular raised edge (18) with cover plate (19) mounted thereon, and the facilities for attachment of the handle with shaft (13) to the cover plate (19) enable said handle to be canting at an angle α in relation to the protection hood (2) and to be telescopic therein at a limited length MAX. L, through which the extension part with sweeper element moves forward underneath the protection hood (2).

**2.** Protection hood as claimed in claim 1, **characterised in that**, said facilities enclose mounted with bolts on the cover plate (19) a first elongated bracket (16) and axially equiped with a slideable axle (26) at one end thereof connected with a set of telescopic mutually springloaded first and second blocks (22, 24) for axially mounting to said first elongated bracket (16), wherein the end of said slideable axle (26) is coupled hingeably with a second fixing bracket (28) to the handle with shaft (13) and wherein said first block (22) is coupled hingeably with a third adjustable bracket (23) also to the handle with shaft (13) of the weed mower (1).

**3.** Protection hood as claimed in claims 1-2, **characterised in that**, in said cover plate (19) a large recess (14) is applied for manoeuvring the handle (13) with extension part (3) in the space beneath the protection hood (2).

**4.** Protection hood as claimed in claim 2, **characterised in that**, for radially moving said elongated bracket (16) over the protection hood (2) tangential recesses (15) are applied for rotating said protection hood (2) in relation to said handle with shaft (13).

**5.** Protection hood as claimed in claim 1, **characterised in that**, said roughly semicircular raised edge (18) is a plastic plate or skirt, such as, for example polyethylene with such a plate thickness that a rigid, somewhat deformable edge is created for catching pieces of steel wire centrifugally flung away from the sweeper elements mounted in the extension part (3).

**6.** Protection hood as claimed in claim 1, **characterised in that**, said cover plate (19) is made of metal, such as, for example, galvanised steel or stainless steel.

**7.** Protection hood as claimed in claim 1 and 2, **characterised in that**, said facilities are made of metal, such as, for example, galvanised steel or stainless steel.

**8.** Protection hood as claimed in claim 1, **characterised in that**, the angle α lies between 8 and 30 degrees, preferably approximately 15 degrees.

**9.** Protection hood as claimed in claim 1, **characterised in that**, the length MAX. L lies between 30 and 90 mm, preferably approximately 50 mm.
